# FASCICULE DE BREVET EUROPEEN

(11) **EP 1 778 601 B1**
(45) Date de publication et mention de la délivrance du brevet: **06.09.2017**
(21) Numéro de dépôt: 05793305.3
(22) Date de dépôt: 26.07.2005
(51) Int. Cl.: C04B 35/624, C04B 38/02, C04B 35/573

(54) **MOUSSE CERAMIQUE CUITE POREUSE, SON PROCEDE DE FABRICATION ET SON UTILISATION**
PORÖSER, GEBRANNTER KERAMISCHER SCHAUM, SEIN HERSTELLUNGSVERFAHREN UND SEINE VERWENDUNG
POROUS, FIRED CERAMIC FOAM, ITS MANUFACTURING PROCESS AND ITS USE

(30) Priorité: 28.07.2004 FR 0408330
(43) Date de publication de la demande: 02.05.2007
(73) Titulaire: Saint-Gobain Centre de Recherches et d'Etudes Européen, 92400 Courbevoie (FR)
(72) Inventeur: HIS, Christian, F-84300 CAVAILLON (FR); PRIGENT, Samuel, F-84300 CAVAILLON (FR); SCALABRINO, Matteo, Via Sempione, 230, 20016 Pero (MI) (IT); VILLERMAUX, Franceline, F-84000 AVIGNON (FR)
(74) Mandataire: Nony
(86) Numéro de dépôt international: PCT/FR2005/001940
(87) Numéro de publication internationale: WO 2006/018536

(56) Documents cités:
- EP-A- 1 329 438
- EP-A- 1 329 439
- EP-A- 1 359 131
- EP-A1- 1 277 717

## Description

L'invention se rapporte à une mousse céramique cuite à base de carbure de silicium recristallisé présentant une porosité intergranulaire, à un procédé d'obtention d'une telle mousse et à des utilisations d'une telle mousse.

Les mousses céramiques poreuses sont des produits poreux connus caractérisés par une faible densité (5 à 50% de la densité théorique). Elles peuvent être constituées à partir de la grande majorité des poudres céramiques, en particulier l'alumine, le carbure de silicium....

Il existe plusieurs procédés de fabrication permettant d'obtenir des mousses céramiques poreuses.

Le plus simple de ces procédés comprend l'addition d'un agent porogène dans une barbotine céramique ou un mélange à presser. Le tout est mis en forme puis subit un cycle de cuisson qui permet de brûler l'agent porogène. En brûlant, l'agent porogène laisse place à une porosité. Ce procédé est décrit par exemple dans le brevet EP 1 140 731 B1. Il présente l'inconvénient de conduire à un dégagement gazeux (éventuellement toxique) dû à la pyrolyse de l'agent porogène. Par ailleurs, il est difficile de fabriquer des pièces épaisses, car le dégagement gazeux est alors difficile à effectuer (il faut pouvoir évacuer le gaz de manière homogène).

Une autre technique est la réplication d'une mousse en polymère, polyuréthane par exemple. Cette mousse est recouverte d'une barbotine céramique. Le tout subit ensuite un cycle de cuisson qui permet de brûler la mousse polyuréthane et de fritter la mousse céramique dont la structure est induite par la mousse polyuréthane de départ. Ce procédé est décrit par exemple dans le brevet US 4,024,212. On retrouve les inconvénients liés au dégagement gazeux (en brûlant, le polyuréthane dégage des gaz à liaison C-N qui sont dangereux). Par ailleurs, il est difficile de réaliser des pièces avec des pores de dimensions inférieures à 200µm.

Une technique alternative est la création de porosités par la formation de gaz par réaction chimique entre différents additifs d'une barbotine de céramique. Ce procédé est décrit par exemple dans les brevets US 5,643,512 ou US 5,705,448. Là encore, on retrouve les inconvénients liés au dégagement de gaz. De plus, il faut associer à ce procédé une technique de consolidation de la mousse.

Une technique consiste à introduire mécaniquement un gaz dans une barbotine par brassage. Là encore, il faut combiner ce procédé avec une technique de consolidation de la mousse obtenue.

Parmi les techniques de consolidation de mousse pouvant être utilisées pour la mise en oeuvre des deux dernières techniques mentionnées ci-dessus, il existe aussi plusieurs possibilités.

Une première solution consiste à mélanger des monomères polymérisables à la barbotine céramique. Dans des conditions particulières, la polymérisation des monomères entraîne la consolidation de la mousse. Ce procédé est décrit par exemple dans le brevet EP 759 020 B1. Par contre, le coût élevé des monomères utilisables ainsi que la difficulté de maîtriser les conditions de polymérisation ont empêché cette technique de se développer de manière industrielle.

Une deuxième solution consiste à réticuler des polymères dans une barbotine céramique. Comme pour la technique précédente, cette réticulation entraîne la consolidation de la mousse. Ce procédé est décrit par exemple dans le brevet EP 330 963. Par contre, le coût élevé des agents de réticulation utilisables ainsi que la difficulté de maîtriser les conditions de réticulation ont empêché cette technique de se développer de manière industrielle.

Un procédé de fabrication de céramiques poreuses plus récent est décrit dans la demande de brevet EP 1 329 439 A1. Ce procédé comporte les étapes suivantes :
1) Préparation d'une suspension d'une poudre céramique dans un dispersant,
2) Préparation d'une solution contenant un biogel, encore appelé « hydrocolloïde », et maintien à une température supérieure à la température de gélification de la solution,
3) Mélange de ladite suspension et de ladite solution, avec ajout d'un agent moussant, jusqu'à obtention d'une mousse, la température étant maintenue suffisamment élevée pour éviter la gélification du biogel,
4) Coulage de la mousse dans un moule,
5) Refroidissement jusqu'à gélification du biogel,
6) Séchage puis cuisson de la mousse obtenue.

L'utilisation d'un biogel pour consolider la mousse permet d'éviter les problèmes de toxicité évoqués précédemment. Cependant, il s'avère que si la mousse coulée dans le moule a une épaisseur supérieure à 60 mm, la mousse n'a pas une structure homogène. De plus, selon ce procédé, la quantité d'eau dans le mélange final est importante (45 à 50% en poids) ce qui entraîne des difficultés de séchage, en particulier pour les pièces de grandes dimensions. Il n'est donc pas possible de fabriquer des pièces céramiques poreuses de structure homogène et présentant de telles dimensions.

La demande de brevet français déposée par la Société Saint-Gobain Centre de Recherches et d'Etudes Européen sous le numéro FR 0408330 décrit un procédé amélioré permettant de fabriquer des pièces en mousse céramique poreuse, de densité homogène, ayant des dimensions supérieures ou égales à 60 mm.

A cet effet, FR 0408330 propose un procédé de fabrication d'une pièce céramique poreuse comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson par traitement à haute température de ladite préforme de manière à obtenir une mousse céramique cuite.

Selon ce procédé, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

Les inventeurs de l'invention décrite dans FR 0408330 ont observé que l'affaissement de la mousse lors de la mise en oeuvre du procédé selon EP 1 329 439 A1 se produit pendant une période critique s'étendant entre la fin de l'étape de cisaillement et le début de la gélification. Pendant cette période, l'agent gélifiant ne contribue sensiblement pas à la stabilisation structurelle de la mousse qui, pour des épaisseurs de plus de 60 mm, s'effondre sous son propre poids. Etant parvenus à identifier la cause de l'affaissement, ils ont proposé d'ajouter un agent stabilisant dans le mélange. L'agent stabilisant est choisi pour sa capacité à augmenter considérablement la viscosité du mélange dès que le cisaillement du mélange cesse, ce qui permet de rigidifier suffisamment la mousse pour éviter son effondrement jusqu'à ce que l'agent gélifiant se gélifie et puisse exercer sa fonction de stabilisation. Il devient ainsi possible de fabriquer des pièces en mousse céramique poreuse, de densité homogène, ayant des dimensions supérieures ou égales à 60 mm et/ou présentant des formes complexes (cône ou cylindre creux, portion de sphère creuse, ...).

Le choix des poudres céramiques utilisées dans les différents procédés décrits ci-dessus est généralement guidé par les contraintes auxquelles sont soumises les mousses en service, en particulier par les contraintes de résistance mécanique ou de conductivité thermique.

Dans certaines applications, par exemple pour une utilisation comme support de catalyseur, on recherche également des surfaces disponibles les plus élevées possibles.

Le document EP 1 277 717 A1 décrit une mousse céramique cuite poreuse en carbure de silicium recristallisé, présentant une porosité totale de 59%. Il existe donc un besoin permanent pour des mousses céramiques présentant des surfaces disponibles toujours plus élevées ou, à surface disponible équivalente, une densité plus faible.

Le but de la présente invention est de satisfaire ce besoin.

Selon l'invention, on atteint ce but au moyen d'une mousse céramique cuite à parois poreuses présentant une porosité totale comprise entre 50 et 92 % (c'est-à-dire une densité comprise entre 8 et 50% de la densité théorique du matériau constituant ladite mousse) et une porosité intergranulaire d'au moins 5 %, de préférence d'au moins 8 %, de préférence encore d'au moins 10%, la porosité intergranulaire étant formée par des pores d'une taille inférieure à 10 µm, plus de 15% des pores cellulaires ayant une taille supérieure à 300 µm, la mousse comportant du carbure de silicium recristallisé. A la différence des mousses céramiques selon l'état de la technique, dont les parois cellulaires sont denses, la mousse céramique selon l'invention présente donc une porosité intergranulaire. Comme on le verra plus en détail dans la suite de la description, cette porosité intergranulaire développe la surface disponible sur les parois des cellules de la mousse. A densités de cellules identiques, une mousse selon la présente invention présente donc une surface exposée à l'environnement extérieur beaucoup plus grande. La mousse selon l'invention représente ainsi un progrès technique considérable dans la recherche de mousses céramiques poreuses présentant une surface disponible élevée.

De préférence, la mousse céramique cuite à parois poreuses selon l'invention, ou « à porosité intergranulaire », présente encore une ou plusieurs des caractéristiques suivantes :
- La porosité intergranulaire est formée par des pores d'une taille inférieure à 10 µm, de préférence inférieure à 8 µm, de préférence en moyenne d'environ 5 µm.
- La taille des pores intergranulaires est en moyenne 10 à 100 fois plus petite que celle des pores cellulaires. De préférence, la taille moyenne des pores cellulaires est située entre 80 et 120 µm, de préférence autour de 100µm, et/ou la taille moyenne des pores intergranulaires est située entre 1 et 10 µm, de préférence autour de 5µm.
- De préférence, au moins une partie des cellules, de préférence toutes les cellules, sont délimitées par des parois au moins en partie, de préférence totalement, en carbure de silicium recristallisé. De préférence encore, la mousse céramique poreuse à porosité intergranulaire comporte au moins 95% en masse de carbure de silicium recristallisé. De préférence, la mousse céramique poreuse à porosité intergranulaire comporte plus de 98% en masse, de préférence encore sensiblement 100 % de carbure de silicium recristallisé.
- Moins de 10% en nombre des pores cellulaires ont une taille inférieure à 10µm, et/ou 20 à 85% des pores cellulaires ont une taille inférieure à 300µm et/ou 4 à 40% des pores cellulaires ont une taille supérieure à 450µm, les pourcentages étant des pourcentages en nombre.
- La mousse céramique poreuse présente en surface moins de 1500, de préférence moins de 1000, de préférence encore moins de 700, pores cellulaires par dm².
- La mousse céramique poreuse présente une épaisseur supérieure à 60 mm.

L'invention concerne également un procédé de fabrication d'une mousse céramique poreuse selon l'invention comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson de ladite préforme de manière à obtenir une mousse céramique poreuse,
remarquable en ce que le mélange M comporte du carbure de silicium et en ce que la cuisson à l'étape e) est effectuée dans des conditions permettant une consolidation par mécanisme d'évaporation-recristallisation dudit carbure de silicium.

Dans la suite de la description, on qualifie cette cuisson de « cuisson à haute température ». Cette cuisson conduit à la formation de carbure de silicium recristallisé.

De préférence, le procédé selon l'invention présente encore une ou plusieurs des caractéristiques suivantes :
- De préférence la poudre céramique utilisée à l'étape a) présente plus de 95% en poids de carbure de silicium.
- Les tailles de particules de la poudre céramique mise en oeuvre à l'étape a) sont distribuées selon une répartition bimodale. Par exemple, on peut utiliser une poudre formée à partir de deux grades de carbure de silicium présentant des diamètres médians différents.
- De préférence, la température de cuisson par traitement à haute température et tous les composants organiques utilisés sont déterminés de manière que tous lesdits composants organiques soient brûlés au cours de la cuisson.
- De préférence, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.
- La viscosité instantanée dudit agent stabilisant, en Pa.s, augmente d'au moins un facteur cent quand une vitesse de cisaillement dudit agent stabilisant diminue de 100 s⁻¹ à 0 s⁻¹. Avantageusement, l'effet sur la stabilisation de la mousse en est renforcé, ce qui permet de fabriquer des pièces poreuses d'épaisseurs supérieures à 90 mm.
- L'évolution de la viscosité dudit agent stabilisant en fonction de la vitesse de cisaillement dudit agent stabilisant est sensiblement réversible. Ainsi, dès que la vitesse de cisaillement du mélange M augmente, l'influence de l'agent stabilisant sur la viscosité du mélange diminue, et même peut devenir négligeable. Avantageusement, la présence de l'agent stabilisant ne conduit donc pas à une augmentation importante du besoin énergétique.
- A l'étape a), on prépare ledit mélange M à partir d'une barbotine céramique A, d'un pré-mélange B contenant au moins un agent gélifiant et un agent stabilisant et d'un pré-mélange C contenant au moins un agent moussant.
- On choisit ledit agent stabilisant de manière que, en fin d'étape c), la viscosité de ladite mousse soit supérieure à 1000 Pa.s à 20°C. De préférence, ledit agent stabilisant est un hydrocolloïde, de préférence d'origine végétale, de préférence encore choisi dans le groupe formé par le xanthane et le carraghénane ou un mélange de ceux-ci. L'agent stabilisant préféré est le xanthane. Avantageusement, les hydrocolloïdes d'origine végétales sont éliminés lors de l'étape de cuisson par traitement à haute température de la préforme, ce qui permet d'obtenir une pièce cuite d'une grande pureté.
- La teneur dudit agent stabilisant dans ledit mélange M est comprise entre 0,05 et 5% en poids, de préférence est comprise entre 0,1 et 1%, en poids.
- Ledit mélange M présente une teneur en eau inférieure à 40%, de préférence inférieure à 30 %, en pourcentage en poids.
- Ledit agent gélifiant est un hydrocolloïde d'origine animale ou végétale apte à gélifier de manière thermoréversible ladite composition après moussage. De préférence, ledit agent gélifiant est de la gélatine. Avantageusement, l'agent gélifiant est éliminé lors de l'étape de cuisson par traitement à haute température de la préforme, ce qui permet d'obtenir une mousse cuite d'une grande pureté. De préférence encore, la teneur en agent gélifiant dans le mélange M est comprise entre 1 et 10%, de préférence entre 1 et 6%, en poids.
- A l'étape a), on ajoute de préférence audit mélange M un agent plastifiant en une quantité en poids comprise entre 0,25 et 1 fois celle dudit agent gélifiant. De préférence encore, l'agent plastifiant est choisi pour brûler à une température supérieure à la température d'évaporation du liquide servant, à l'étape a), à mettre en suspension la poudre céramique, généralement de l'eau.

L'invention concerne enfin l'utilisation d'une céramique poreuse selon l'invention ou d'une céramique poreuse fabriquée au moyen d'un procédé selon l'invention, pour des supports de catalyse, pour la filtration de liquides ou de gaz chauds, comme diffuseur (pièce chauffée laissant passer le mélange air/gaz nécessaire à la combustion) dans un brûleur à gaz, dans un récepteur volumétrique solaire, en anglais « solar volumetric receiver », ou comme pièce de gazetterie (supports de cuisson).

D'autres caractéristiques et avantages de la présente invention apparaîtront à la lecture de la description qui va suivre et à l'examen du dessin annexé dans lequel :
- les figures 1 à 4 montrent, à différents grossissements, des images obtenues au Microscope Electronique à Balayage sur des échantillons pris à 10 à 20 mm de la surface de mousses frittées fabriquées selon un procédé tel que celui décrit dans FR 0408330, en utilisant une poudre d'alumine ;
- les figures 5 et 6 sont des graphiques mettant en évidence des comportements rhéologiques de différents pré-mélanges B ;
- les figures 7 à 9 montrent, à différents grossissements, des images obtenues au Microscope Electronique à Balayage sur des échantillons pris à 10 à 20 mm de la surface de mousses cuites fabriquées selon un procédé selon l'invention ;

Dans les différentes figures, des références identiques sont utilisées pour désigner des objets identiques ou analogues.

La recristallisation est un phénomène bien connu correspondant à une consolidation par évaporation des plus petits grains de carbure de silicium puis condensation pour former les liens entre les plus gros grains.

Par « carbure de silicium recristallisé », on entend du carbure de silicium recristallisé pendant l'étape de cuisson par traitement à haute température de la mousse céramique.

On appelle « taille d'un pore » sa dimension maximale. Dans les produits de l'invention, les pores ont une forme quasi-sphérique et la taille est dans ce cas le diamètre. La taille des pores se mesure par analyse d'images de la surface des mousses cuites.

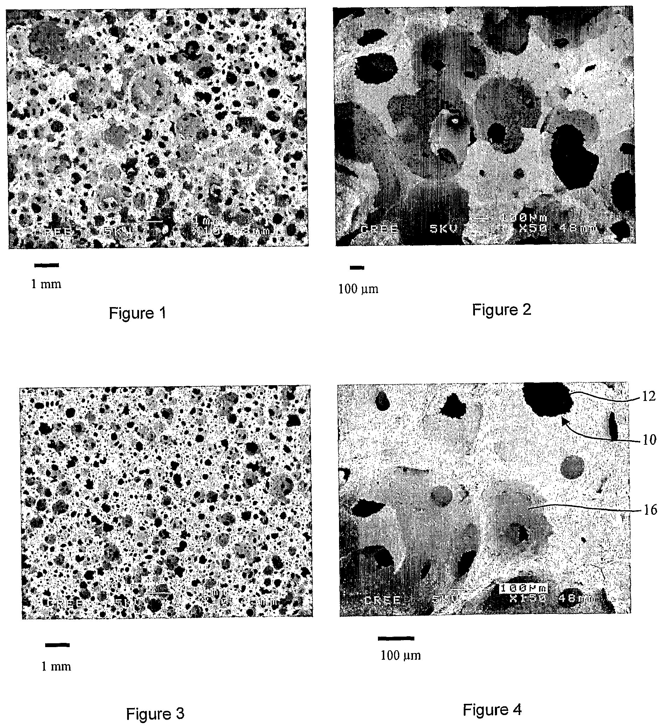

On décrit à présent un procédé pouvant être mis en oeuvre pour fabriquer les mousses céramiques représentées sur les figures 1 à 4 et 7 à 9.

Ce procédé comporte les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson par traitement à haute température de ladite préforme de manière à obtenir une mousse céramique poreuse.

Dans la première étape a) de ce procédé de fabrication, on prépare un mélange contenant une poudre céramique en suspension, de préférence dans de l'eau, au moins un agent gélifiant et au moins un agent moussant. En outre, on ajoute de préférence audit mélange M un agent stabilisant.

On procède de préférence de la manière suivante.

On prépare d'abord,
- une barbotine A par dispersion de la poudre céramique et d'un dispersant dans de l'eau, selon une technique classique,
- un pré-mélange B par dissolution des agents gélifiant et stabilisant dans de l'eau, à une température supérieure à la température de gélification de l'agent gélifiant,
- un pré-mélange C par solubilisation d'un agent moussant dans de l'eau.

La quantité de poudre céramique dans la barbotine A est de préférence comprise entre 50 et 90 % en poids, de préférence entre 70 et 85% en poids, de la barbotine A. De préférence, le mélange M contient de 50 à 80%, de préférence de 60 à 70%, en poids de particules céramiques.

La nature de la poudre céramique est adaptée en fonction de la mousse céramique à fabriquer.

Dans le cas de la fabrication de mousse en carbure de silicium recristallisé selon l'invention, la poudre est une poudre de carbure de silicium dont la distribution granulométrique est de préférence bimodale. Le premier mode est de préférence inférieur à 5 µm, de préférence encore inférieur à 3 µm, de préférence toujours inférieur à 1 µm, et le second mode est de préférence supérieur à 10 µm, de préférence supérieur à 20 µm. Une telle distribution granulométrique permet avantageusement d'obtenir une mousse céramique présentant une porosité intergranulaire particulièrement développée.

Le dispersant, par exemple un tensio-actif de type polyacrylate, est choisi de manière à être efficace à la température de mélange.

L'agent gélifiant est de préférence un hydrocolloïde d'origine animale ou végétale apte à gélifier de manière thermoréversible ladite composition après moussage, par exemple de la gélatine, le carraghénane, ou un mélange de ceux-ci.

L'agent stabilisant peut être quelconque. De préférence, il présente la propriété de présenter une viscosité qui augmente d'au moins un facteur dix quand le gradient de la vitesse de son cisaillement diminue de 100 s⁻¹ à 0 s⁻¹. De préférence, l'agent stabilisant est choisi de manière que la viscosité du mélange M pendant le cisaillement, soit peu augmentée du fait de son incorporation dans ce mélange.

Avantageusement, il est ainsi possible d'utiliser les mélangeurs utilisés selon la technique antérieure sans avoir besoin d'augmenter la teneur en eau du mélange. L'augmentation de la teneur en eau entraînerait en effet des problèmes lors du séchage ultérieur.

De préférence, l'agent stabilisant est choisi pour être réversible. De préférence encore, on choisit l'agent stabilisant et l'agent gélifiant de manière que
- la viscosité de la mousse gélifiée soit supérieure ou égale à celle d'une mousse gélifiée obtenue à partir d'un mélange identique au mélange M mais qui ne contiendrait pas d'agent stabilisant, et
- la viscosité de la mousse obtenue entre les étapes b) et c) (avant gélification et après la fin de l'opération de moussage) soit supérieure ou égale à celle d'une mousse gélifiée obtenue à partir d'un mélange identique au mélange M mais qui ne contiendrait pas d'agent gélifiant.

De préférence on choisit l'agent stabilisant et l'agent gélifiant de manière qu'ils n'interagissent sensiblement pas l'un sur l'autre. Les associations de gélatine d'une part et de xanthane et/ou de carraghénane, de préférence de xanthane seul, sont préférées entre toutes.

Le xanthane et le carraghénane sont des gels physiques, c'est-à-dire présentant une structure réversible en réseau dans laquelle les liaisons sont formées par interaction physique (cristallisation, formation d'hélice, vitrification...). Par exemple, la molécule de xanthane se conforme sous forme de simple, double ou triple hélice qui interagit avec d'autres molécules pour former un réseau complexe. En solution dans l'eau des agrégats à liaisons faibles se forment. Ces agrégats peuvent être dissociées par l'action de cisaillement.

De préférence, au moins un agent plastifiant, de préférence se présentant sous forme liquide à la température de préparation du mélange M, de préférence un polyol, de préférence encore le glycérol, est ajouté au pré-mélange B. L'agent plastifiant est choisi pour présenter une bonne compatibilité avec l'agent gélifiant, c'est-à-dire une capacité à rester à l'intérieur du mélange M et à résister ainsi à la migration et aux solvants, sans pour autant provoquer de séparation de phases. De préférence la teneur en agent plastifiant est comprise entre 0,25 et 1 fois celle de l'agent gélifiant.

L'agent moussant, de préférence un savon, est de préférence ajouté dans le pré-mélange C en une proportion comprise entre 55 et 75% en poids dudit pré-mélange. De préférence encore, la quantité d'agent moussant est déterminée de manière que sa teneur dans le mélange M soit comprise entre 1 et 3% en poids.

Le mélange M peut en outre contenir un ou plusieurs liants thermoplastiques usuellement utilisés en céramique.

La barbotine A et le pré-mélange C sont ensuite ajoutés au pré-mélange B sous agitation mécanique, la température, dite « température de mélange » étant maintenue supérieure à la température de gélification de l'agent gélifiant. De préférence, les pré-mélanges A, B et C sont mélangés immédiatement après leur préparation pour former le mélange M. L'agent stabilisant conduit à des solutions aqueuses présentant une viscosité stable dans la gamme de température utilisée.

Le pH du pré-mélange B peut être acide, basique ou neutre et est de préférence choisi de manière à permettre une bonne dispersion avec le pré-mélange A.

A l'étape b), le mélange M est cisaillé de manière à mousser. Le cisaillement peut résulter d'une agitation mécanique, d'une insufflation de gaz, ou bien par toute combinaison de ces deux techniques. Dans le cas de l'insufflation de gaz, on préfère utiliser une membrane munie de trous calibrés.

Pendant cette étape b), si la viscosité de l'agent stabilisant est réversible sous l'effet du cisaillement, le cisaillement réduit la viscosité du mélange.

L'étape b) s'effectue à une température supérieure à la température de gélification de l'agent gélifiant, par exemple à la température de mélange.

Après obtention de la mousse céramique, on arête le cisaillement, puis, éventuellement, on coule la mousse dans un moule.

La présence du stabilisant augmente immédiatement la viscosité du mélange du fait de la fin du cisaillement. L'agent stabilisant rigidifie donc la structure de la mousse alors même que la température reste supérieure à la température de gélification. Tout affaissement de la mousse sur elle-même avant l'étape de gélification est ainsi évité et il devient possible de fabriquer des mousses stables ayant une épaisseur de plus de 60 mm, et même de plus de 80 mm.

A l'étape c) on refroidit ou on laisse se refroidir la mousse jusqu'à une température inférieure à la température de gélification de l'agent gélifiant, de préférence jusqu'à température ambiante (10-25°C). La gélification permet avantageusement d'obtenir une mousse gélifiée suffisamment rigide pour être manipulée sans se dégrader. Le procédé se prête donc bien à une mise en oeuvre industrielle.

La mousse gélifiée est alors séchée à température ambiante, puis de préférence étuvée à une température de 100 à 120°C de manière à obtenir une préforme susceptible d'être cuite. La préforme, ou « cru », peut avantageusement avoir une épaisseur pouvant aller jusqu'à 80 mm, et même 150 mm.

Pour fabriquer des mousses céramiques du type de celles représentées sur les figures 1 à 4, la préforme est calcinée sous air, à sa température de frittage, à savoir 1200-1500°C pour la cordiérite et 1400-2300°C pour l'alumine, la mullite ou la zircone ou le carbure de silicium. Des conditions possibles pour le frittage à haute température du carbure de silicium sont par exemple décrites dans FR 2 313 331.

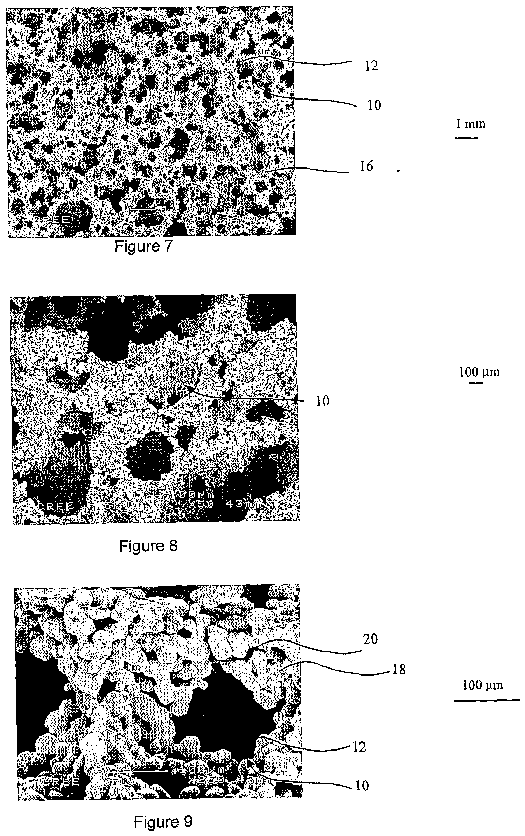

Les conditions pour la cuisson à l'étape e) permettant de fabriquer des mousses céramiques selon l'invention, du type de celles représentées sur les figures 7 à 9, sont bien connues, la recristallisation du carbure de silicium étant une technique ancienne. On peut par exemple se référer à US 2,964,823, délivré le 20 décembre 1960, ou à l'article « Finely Layered Recrystallized Silicon Carbide for Diesel Particulate Filters », Process Engineering, cfi/Ber. DKG 81 (2004) n°10.

De préférence, la préforme est calcinée sous atmosphère non oxydante, de préférence sous atmosphère neutre, de préférence encore sous argon, à une température permettant d'obtenir du carbure de silicium recristallisé, de préférence comprise entre 1800 et 2500°C, de préférence entre 2050 et 2350°C.

D'autres conditions de cuisson par traitement à haute température sont envisageables, pourvu qu'elles conduisent à une recristallisation du carbure de silicium.

Après étuvage et avant ou après cuisson par traitement à haute température, la mousse peut être usinée pour obtenir une pièce aux dimensions souhaitées.

La céramique poreuse obtenue par cuisson par traitement à haute température de la préforme, du type de celles représentées sur les figures 7 à 9 ou sur les figures 1 à 4, est une mousse à structure ouverte et interconnectée. Elle présente avantageusement une densité après cuisson comprise entre 8 et 50% de la densité théorique du matériau (égale à 4 grammes par centimètres cube pour l'alumine et à 3,2 grammes par centimètres cube pour le carbure de silicium recristallisé), soit 50 à 92% de porosité.

La taille des pores cellulaires varie généralement entre 10 et 2000 µm.

La mousse présente une pluralité de cellules 10 connectées à d'autres cellules adjacentes par des fenêtres 12. Une cellule à la surface de la mousse céramique poreuse présente encore une ou plusieurs ouvertures 16 vers l'extérieur. On appelle « porosité d'interconnexion » la porosité créée par les fenêtres d'interconnexion 12 entre les cellules et par les ouvertures 16 des cellules superficielles.

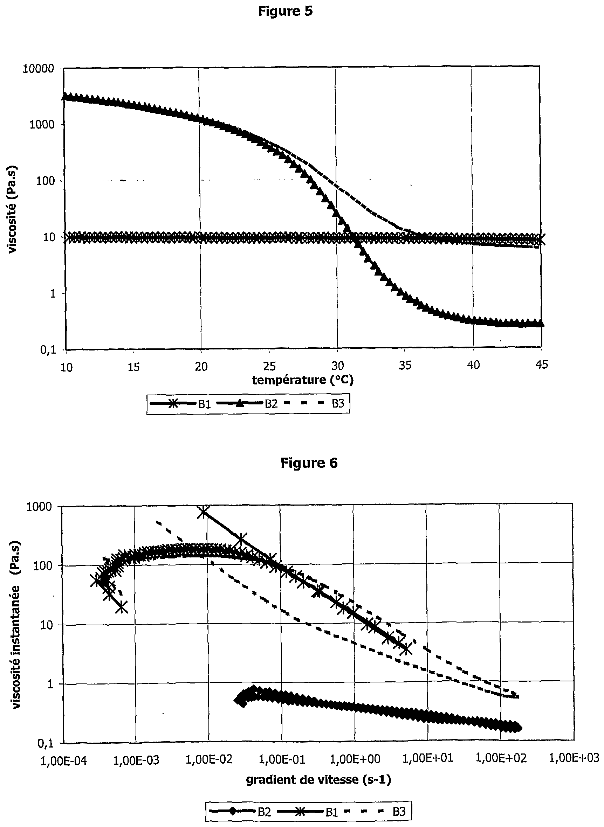

On se reporte à présent aux figures 5 et 6.

La figure 5 représente l'évolution de la viscosité de trois pré-mélanges B1, B2 et B3, fournis à titre d'exemples.
- B1 contient 87% d'eau, 7,4% de glycérine, 4,8% d'alcool polyvinylique et 0,8% de xanthane.
- B2 contient 77,3% d'eau, 6,5% de glycérine, 4,2% d'alcool polyvinylique et 12% de gélatine.
- B3 contient 76,7% d'eau, 6,5% de glycérine, 4,2% d'alcool polyvinylique, 11,9% de gélatine et 0,7% de xanthane.

Ces pré-mélanges sont préparés à 80°C puis maintenus 3 heures à 40°C. On mesure ensuite la viscosité de ces mélanges, maintenus au repos, en fonction de leur température en baissant la température de 1°C par minute, depuis 45°C (proche de la température d'élaboration du mélange M) jusqu'à 10°C. La mesure est effectuée avec un viscosimètre Bohlin® CVO 120 en cône plan (diamètre 40mm, angle 4°) en oscillation à 1 hertz avec une déformation de 0,01. Les résultats du test A sont présentés sur la figure 5.

La figure 5 montre que le xanthane seul (courbe B1) ne permet pas de faire varier la viscosité du mélange en fonction de la température. Le xanthane n'est donc pas un gel thermoréversible, à la différence de la gélatine (courbe B2). Le xanthane n'apparaît donc pas approprié pour faire varier la viscosité d'un mélange céramique en fonction de la température. Il apparaît donc en particulier peu approprié pour gélifier une mousse céramique lors de son refroidissement.

Il apparaît également sur la figure 5 que le xanthane ne permet pas, à lui seul, d'atteindre une viscosité importante susceptible de figer une mousse céramique. Au contraire, la gélatine permet d'atteindre, à température ambiante (10-25°C), des viscosités satisfaisantes, entre 200 et 500 fois supérieures à celles atteintes avec le xanthane seul.

Il apparaît enfin sur la figure 5 que la présence de xanthane n'entrave pas l'action gélifiante de la gélatine, l'effet du xanthane étant négligeable à des températures inférieures à 25 °C. L'association de xanthane et de gélatine n'a apparemment sensiblement aucun effet technique à des températures inférieures à 25 °C et ne semble donc pouvoir n'aboutir qu'à une augmentation des coûts de fabrication.

Sur la figure 6, les viscosités instantanées de B1, B2 et B3 à 45°C ont été représentées en fonction de ce gradient de vitesse (ou « vitesse de cisaillement »). Pour obtenir les résultats représentés sur la figure 6, on fait évoluer le gradient de vitesse de manière croissante, puis on attend 1 minute, puis on fait évoluer le gradient de vitesse de manière décroissante. Pendant toute la durée de l'essai, mené à une température de 45°C (proche de la température d'élaboration du mélange M), on mesure l'évolution de la viscosité. Les mesures sont effectuées avec un viscosimètre Bohlin® CVO 120 en cône plan (diamètre 40mm, angle 4°) en rotation.

On observe qu'en absence de xanthane, la viscosité de la gélatine n'évolue pas ou très peu en fonction du gradient de vitesse. En revanche, la viscosité instantanée du mélange de gélatine et de xanthane, comme celle du xanthane seul, diminue très fortement lorsque le cisaillement augmente et retrouve de très fortes valeurs lorsque le cisaillement diminue, et ce même à des teneurs faibles de xanthane.

Les inventeurs ont également constaté qu'une augmentation ou une diminution de la viscosité d'un produit (gélatine, xanthane ou mélange de xanthane et de gélatine), suite à une évolution de la température ou de la vitesse de cisaillement conduit, dans les mêmes conditions de température et de cisaillement, à une amélioration ou une détérioration, respectivement, de la tenue structurelle de la mousse obtenue par cisaillement d'une composition réfractaire incorporant ce produit.

A la fin de l'étape de cisaillement b), le mélange de gélatine et de xanthane incorporé dans le mélange M conduit ainsi, suivant l'enseignement de la figure 6, à une amélioration immédiate de la tenue structurelle de la mousse dans des proportions très largement supérieures à celle que pourrait conférer la gélatine seule. La mousse est alors suffisamment rigide pour ne pas s'effondrer sur elle-même. Elle est d'une manipulation plus facile. Enfin l'action du mélange de xanthane et de gélatine évite une modification de la structure (coalescence des bulles d'air, ségrégation de la poudre céramique...) qui pourrait conduire à une hétérogénéité du produit et une fragilisation.

La température de la mousse baisse alors progressivement, ce qui permet, suivant l'enseignement de la figure 5, d'augmenter encore la tenue structurelle de la mousse dans des proportions très largement supérieures à celle que pourrait conférer le xanthane seul. La mousse est alors suffisamment rigide pour pouvoir être manipulée dans des conditions industrielles sans se détériorer.

Les actions de la gélatine et du xanthane se complètent donc parfaitement pour la mise en oeuvre du procédé selon l'invention, en particulier pour la fabrication de pièces de grandes dimensions.

On se reporte à présent aux figures 7 à 9 qui représentent des photos au microscope électronique à balayage d'une mousse céramique de carbure de silicium recristallisé à porosité intergranulaire, correspondant à l'exemple 21 selon l'invention décrit ci-dessous.

Cette mousse a été obtenue dans le cas particulier où la poudre céramique utilisée à l'étape a) du procédé décrit ci-dessus est une poudre comportant au moins 95% en poids de carbure de silicium, et où la cuisson par traitement à haute température est effectuée dans des conditions permettant la recristallisation du carbure de silicium.

Ces conditions sont bien connues de l'homme du métier.

On peut remarquer que les parois céramiques délimitant les cellules ne sont pas de même nature sur les figures 1-4 et 7-8. En effet, les parois d'alumine (figures 1 à 4) sont denses alors que les parois de carbure de silicium recristallisé (figures 7 à 9) sont poreuses.

Les parois 17 en carbure de silicium recristallisé délimitant les cellules 10 sont en effet formées par agglomération de grains 18, cette agglomération laissant subsister des interstices 20, ou « pores intergranulaires » entre les grains 18.

Les grains 18 sont formés par les plus grosses particules de la poudre de carbure de silicium utilisée à l'étape a). La distribution granulométrique des grains 18 est donc sensiblement la même que celle de ces plus grosses particules.

Les parois 17 présentent ainsi une porosité dite « intergranulaire ». La porosité intergranulaire est donc constituée par les espaces interstitiels que crée nécessairement entre des grains l'agglomération de ces grains.

Dans le cas des mousses en carbure de silicium recristallisé selon l'invention, la porosité intergranulaire coexiste ainsi avec la « porosité d'interconnexion » entre les cellules de la mousse.

Comme décrit ci-dessus, la porosité d'interconnexion est créée par les « pores cellulaires », à savoir les fenêtres d'interconnexion 12 entre les cellules 10 et les ouvertures 16 vers l'extérieur des cellules superficielles. La porosité d'interconnexion est donc formée par des ouvertures dont les contours ne sont pas la conséquence nécessaire d'une agglomération de grains, mais résultent d'un agencement particulier de ces grains. A la différence de la porosité intergranulaire, elle permet une connexion directe (c'est-à-dire « en ligne droite ») entre les cellules adjacentes.

La porosité totale est la somme de la porosité d'interconnexion et de la porosité intergranulaire.

Dans l'exemple représenté sur les figures 7 à 9, la taille moyenne des pores cellulaires se situe autour de 100µm alors que la taille moyenne des pores intergranulaires est autour de 5µm. La porosité totale de l'exemple 21 est de 86% (densité 0,43 g/cm³) et la porosité intergranulaire est d'environ 10%.

La porosité intergranulaire peut être modifiée en fonction de la taille des grains de la poudre de carbure de silicium utilisée. La porosité d'interconnexion peut être modifiée en fonction de l'agent moussant mis en oeuvre, en particulier en fonction de sa quantité dans le mélange initial.

La présence d'une double porosité réglable dans les mousses céramiques à base de carbure de silicium recristallisé selon l'invention, est particulièrement avantageuse.

La présence de la porosité intergranulaire confère en effet à la fois une très grande surface disponible et une faible densité.

Les mousses à porosité intergranulaire selon l'invention sont donc efficaces pour la filtration et/ou comme support de catalyseur, tout en étant légères.

Leur faible densité implique également une faible inertie thermique. Ces mousses résistent donc très bien aux fortes températures et sont donc bien adaptées pour servir de supports de cuisson. Les mousses en carbure de silicium recristallisé sont utiles dans cette application car elles peuvent résister à de très hautes températures. Du fait qu'elles conduisent efficacement la chaleur, résistent aux hautes températures et laissent passer l'air, les mousses en carbure de silicium recristallisé sont également parfaitement adaptées pour former des diffuseurs de flamme dans des brûleurs infrarouge.

De préférence, la taille des pores intergranulaires est en moyenne 10 à 100 fois plus petite que celle des pores cellulaires. Il est également préférable que la taille moyenne des pores cellulaires soit située entre 80 et 120 µm, de préférence autour de 100µm, et/ou que la taille moyenne des pores intergranulaires soit située entre 1 et 10 µm, de préférence autour de 5µm.

Les exemples non limitatifs suivants sont donnés dans le but d'illustrer l'invention.

Dans les exemples comparatifs et inventifs qui suivent, les matières premières employées ont été choisies parmi :
- de l'alumine Al₂O₃ réactive, ou un mélange d'alumines réactives, contenant plus de 99% d'Al₂O₃, le diamètre médian pouvant varier de 0,1 µm à 200 µm;
- de la zircone contenant plus de 99% de ZrO₂, le diamètre médian pouvant varier de 0,1 µm à 200 µm;
- du Prox® BO₃ dispersant à base de polyacrylate d'ammonium, commercialisé par Synthron;
- de la gélatine GPA A0, commercialisée par Wesardt International;
- du satiaxane™ CX90T, gomme de xanthane produite et commercialisée par SKW Biosystems;
- du RHODOVIOL® 4/125, alcool polyvinylique à faible taux d'hydrolyse (88mol%) commercialisé par Rhodia PPMC;
- de la glycérine, commercialisé par Moulet Peinture (Avignon - France);
- du Schäumungsmittel W53FL, dispersant à base de polyacrylate d'ammonium, commercialisé par Zschimmer & Schwarz GmbH.;
- de la cordiérite dont le diamètre médian est situé autour de 4µm et contenant 54% de SiO₂ 29% d'Al₂O₃, 13% de MgO et moins de 2,5% de Fe₂O₃+TiO₂;
- de la mullite dont le diamètre médian est situé autour de 9µm et contenant 26% de SiO₂, 73% d'Al₂O₃, 13% de MgO et moins de 2,5% de Fe₂O₃+TiO₂;
- du carbure de silicium SiC-1 dont le diamètre médian est situé autour de 0,6µm et contenant plus de 99,5% de SiC ;
- du carbure de silicium SiC-2 dont le diamètre médian est situé autour de 2,5µm et contenant plus de 99,5% de SiC ;
- du carbure de silicium SiC-3 dont le diamètre médian est situé autour de 23µm et contenant plus de 99,5% de carbure de silicium.

Dans tous les exemples comparatifs et inventifs suivants, le dispersant est toujours le Prox® BO3, l'agent moussant toujours le W53FL, le plastifiant est la glycérine et le durcissant est le RHODOVIOL® 4/125.

La barbotine A est réalisée par dispersion de la poudre céramique et du dispersant dans de l'eau. La poudre céramique est l'alumine (Al₂O₃) pour les exemples comparatifs 1 à 16 et 19, la mullite (Al₂O₃-SiO₂) pour l'exemple comparatif 17, un mélange de 80% de cordierite et 20% de mullite pour l'exemple comparatif 18, un mélange de 80% d'alumine et 20% de zircone pour l'exemple comparatif 20 et au moins deux poudres de carbure de silicium pour les exemples selon l'invention 21 à 23 suivant les proportions massiques suivantes :

| Exemple | 21 | 22 | 23 |
|---|---|---|---|
| SiC-1 (%) | 33 | | |
| SiC-2 (%) | | 66 | 67 |
| SiC-3 (%) | 67 | 34 | 33 |

Pour les exemples selon l'invention 21 à 23, 0,45% de soude 1N ont joué le rôle du dispersant ; la barbotine avait ainsi un pH autour de 9.

Le pré-mélange B est réalisé, dans un bain marie à 55°C, par dissolution de gélatine GPA A0 et éventuellement de xanthane, de glycérine et de durcissant dans de l'eau.

Le pré-mélange C est réalisé par solubilisation de deux tiers (en poids) d'agent moussant solubilisé dans un tiers d'eau.

A et C sont ajoutés à B dans un bain marie à 55°C sous agitation mécanique constante pendant 20 minutes. Les proportions des constituants de A, B et C dans le mélange final M, hors poudre céramique, sont données dans le tableau 1. La mousse obtenue est coulée dans un moule à température ambiante, inférieure à 25°C. Le moule a des dimensions de 300mmx300mmx45mm sauf pour l'exemple comparatif 19 pour lequel le moule a une hauteur de 80mm (section identique : 300mmx300mm). Elle est séchée 24 heures à température ambiante puis 24 heures à 35°C sous ventilation forcée pour obtenir la préforme.

Cette préforme est ensuite frittée sous air pendant 4 heures à 1600°C sauf pour les exemples comparatifs 1 et 2 pour lesquels la préforme obtenue était trop friable pour subir le cycle de frittage et pour les exemples d'invention 21 à 23 pour lesquels la préforme a été cuite sous argon pendant 3 heures à 2270°C pour obtenir du carbure de silicium recristallisé.

On peut remarquer que, lors de la cuisson par traitement à haute température le retrait dimensionnel, de l'ordre 15 à 20%, est sensiblement le même dans toutes les directions.

Certaines caractéristiques des mousses céramiques ainsi obtenues ont été reportées dans les tableaux 1 et 2.

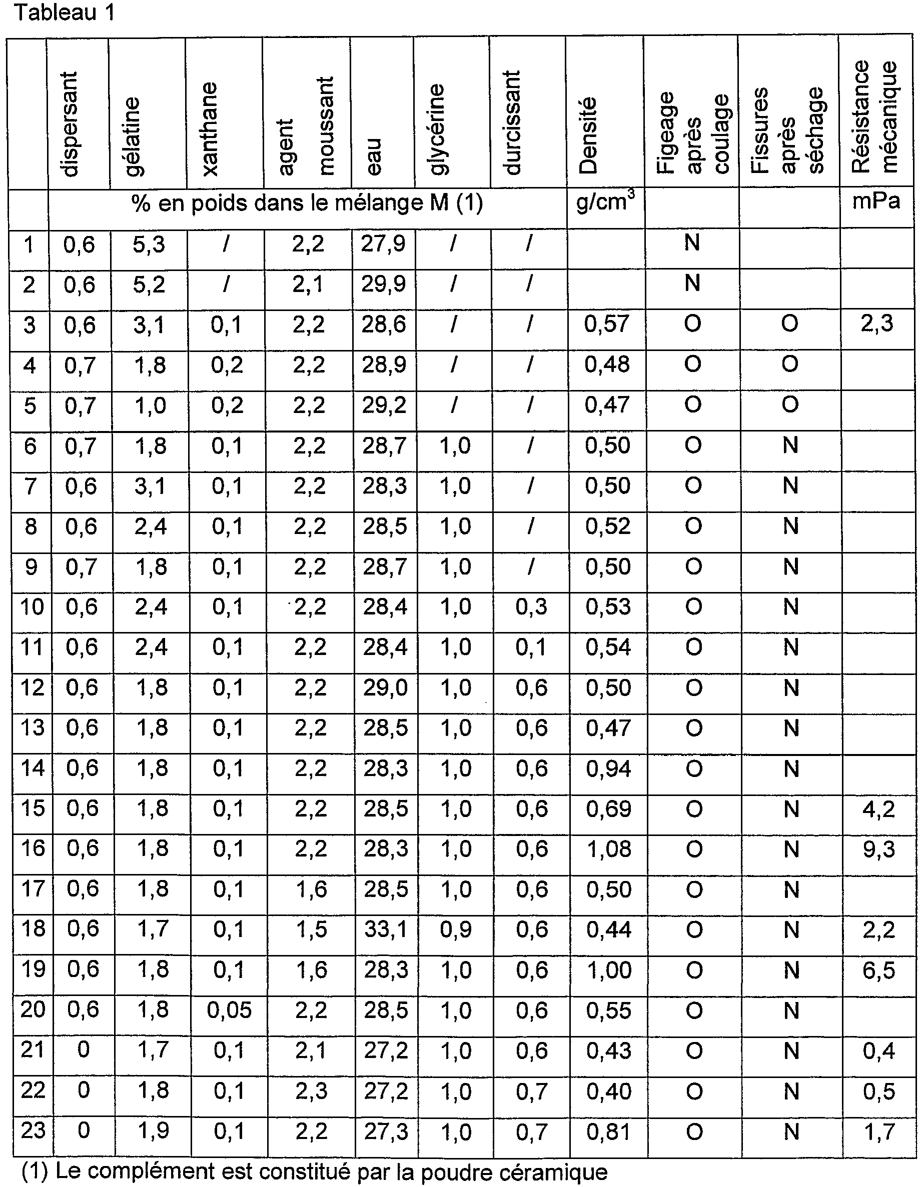

Après le coulage, on peut parfois constater un figeage immédiat dès que l'agitation et/ou la manipulation (coulage dans un moule) cesse. Par « figeage », on entend que la hauteur de la pièce coulée ne diminue pas et/ou ne varie pas selon les zones de la pièce coulée. Dans le tableau, « O » signifie que le figeage a été observé et « N » signifie que la structure de la mousse coulée a évolué après coulage (absence de figeage).

Enfin, pour certaines mousses on observe la présence de quelques fissures sur les pièces séchées. La présence de fissures est indiquée par « O » dans le tableau 1, « N » signifiant qu'il n'y a pas de fissure observée. Ces fissures sont principalement situées sur les arêtes des pièces et ont une longueur de quelques mm à quelques cm. Ces fissures ne sont pas critiques et pourraient être éliminées par usinage. Elles sont cependant gênantes.

La densité est mesurée selon une méthode géométrique classique et exprimée en grammes par centimètres cube.

Les résultats du tableau 1 mettent en évidence l'avantage à ajouter un agent stabilisant apte à figer la structure obtenue par moussage mécanique. On obtient ainsi des pièces homogènes et aux dimensions souhaitées.

L'agent plastifiant permet d'obtenir des pièces plus souples et pour lesquelles le séchage n'induit pas la formation de fissures. Par ailleurs, de préférence, comme c'est le cas ici, l'agent plastifiant utilisé brûle à une température très supérieure à la température d'évaporation de l'eau. Ce composé va donc jouer son rôle même sur la pièce séchée et, lors de la cuisson, va permettre de garder une certaine humidité dans la pièce et éviter ainsi une cuisson trop rapide et un effet de "croûte" sur le produit final. Cet effet favorable est particulièrement utile pour la fabrication de pièces de grandes dimensions.

Comme décrit ci-dessus, les mousses céramiques fabriquées selon le procédé décrit ci-dessus, en particulier les mousses selon l'invention, présentent une structure formée de cellules imbriquées, délimitées par des parois céramiques et connectées entre elles par des fenêtres. La taille des pores cellulaires est répartie de manière relativement homogène entre 10 et 2000µm ; moins de 10% des pores cellulaires ont un diamètre inférieur à 10µm, 20 à 85% des pores cellulaires ont un diamètre inférieur à 300µm et 4 à 40% des pores cellulaires ont un diamètre supérieur à 450µm.

Ces mousses selon l'invention se distinguent également des mousses connues à ce jour par une plage de tailles de pores cellulaires très étendue, l'absence d'une taille de pores cellulaires dominante et un plus faible nombre de pores cellulaires par unité de surface. On peut en effet compter en général moins de 1500 pores cellulaires par dm².

Par ailleurs, on observe que, lorsque la densité diminue, l'augmentation de porosité se fait par augmentation de la taille des pores cellulaires alors que leur nombre diminue. Plus de 15% des pores cellulaires, et parfois même au moins 30% des pores cellulaires, ont un diamètre supérieur à 300µm.

Au contraire, les mousses céramiques connues à ce jour présentent une taille de pores variant peu en fonction de la densité et généralement inférieure à 300µm pour 90% des pores ; la diminution de densité s'accompagne alors d'une augmentation du nombre de pores.

La présence de gros pores cellulaires des mousses selon l'invention du tableau 1 permet aussi d'obtenir des produits présentant une très faible perte de charge ce qui est particulièrement avantageux dans certaines applications, par exemple pour la filtration de gaz.

Ces mousses sont également remarquables en ce qu'elles présentent une pureté chimique très élevée. Cette pureté est liée à la pureté des matières premières céramiques utilisées puisque tous les composants organiques utilisés sont brûlés au cours de la cuisson par traitement à haute température.

Comme cela apparaît clairement à présent, l'invention fournit une mousse céramique cuite poreuse qui présente, du fait de la structure spécifique des parois qui en délimitent les cellules, une surface exposée à l'environnement extérieur considérable. Cette nouvelle microstructure des parois cellulaires ouvre donc des perspectives de développement très larges.

Bien entendu, la présente invention n'est pas limitée aux modes de réalisation décrits et représentés fournis à titre d'exemples illustratifs et non limitatifs.

En particulier, la mousse céramique à porosité intergranulaire selon l'invention se caractérise par une microstructure particulière, une porosité totale comprise entre 50 et 92 % et une porosité intergranulaire d'au moins 5 %, la porosité intergranulaire étant formée par des pores d'une taille inférieure à 10 µm, plus de 15% des pores cellulaires ayant une taille supérieure à 300 µm, la mousse comportant du carbure de silicium recristallisé. A la connaissance des inventeurs, une mousse céramique cuite en carbure de silicium recristallisé présentant cette microstructure, notamment une mousse cuite en carbure de silicium recristallisée, n'est pas connue de l'état de la technique. L'invention concerne donc toute mousse céramique cuite selon la revendication 1 indépendamment du procédé mis en oeuvre pour la fabriquer.

Dans l'invention, cette microstructure résulte d'une recristallisation de carbure de silicium lors de l'étape de cuisson par traitement à haute température. D'autres matériaux céramiques sont cependant également envisageables.

## Revendications

1. Mousse céramique cuite poreuse présentant une porosité totale comprise entre 50 et 92 % et une porosité intergranulaire d'au moins 5 %, la porosité intergranulaire étant formée par des pores d'une taille inférieure à 10 µm, plus de 15% des pores cellulaires ayant une taille supérieure à 300 µm, la mousse comportant du carbure de silicium recristallisé.

2. Mousse céramique poreuse selon la revendication 1, comportant au moins 95% en masse de carbure de silicium recristallisé.

3. Mousse céramique poreuse selon l'une quelconque des revendications précédentes présentant une porosité intergranulaire d'au moins 8 %.

4. Mousse céramique poreuse selon la revendication 1 présentant une porosité intergranulaire d'au moins 10 %.

5. Mousse céramique poreuse selon l'une quelconque des revendications précédentes, dans laquelle la taille des pores intergranulaires est en moyenne 10 à 100 fois plus petite que celle des pores cellulaires.

6. Mousse céramique poreuse selon l'une quelconque des revendications précédentes, dans laquelle la taille moyenne des pores cellulaires est située entre 80 et 120 µm et/ou la taille moyenne des pores intergranulaires est située entre 1 et 10 µm.

7. Mousse céramique poreuse selon l'une quelconque des revendications précédentes, dans laquelle moins de 10% des pores cellulaires ont une taille inférieure à 10µm et/ou 20 à 85% des pores cellulaires ont une taille inférieure à 300µm et/ou 4 à 40% des pores cellulaires ont une taille supérieure à 450µm, les pourcentages étant des pourcentages en nombre.

8. Procédé de fabrication d'une mousse céramique poreuse selon l'une quelconque des revendications précédentes, comprenant les étapes successives suivantes :
a) préparation d'un mélange M contenant une poudre céramique en suspension, au moins un agent gélifiant et au moins un agent moussant, à une température de mélange supérieure à la température de gélification dudit agent gélifiant,
b) cisaillement dudit mélange M à une température de moussage supérieure à ladite température de gélification, jusqu'à obtention d'une mousse,
c) gélification de ladite mousse par refroidissement dudit mélange M à une température inférieure à la température de gélification dudit agent gélifiant,
d) séchage de ladite mousse gélifiée de manière à obtenir une préforme,
e) cuisson de ladite préforme de manière à obtenir une mousse céramique poreuse,
**caractérisé en ce que** le mélange M comporte du carbure de silicium et **en ce que** la cuisson à l'étape e) est effectuée dans des conditions permettant une consolidation par mécanisme d'évaporation-recristallisation dudit carbure de silicium.

9. Procédé selon la revendication 8, dans lequel la poudre céramique utilisée à l'étape a) présente plus de 95% en poids, de carbure de silicium.

10. Procédé selon l'une quelconque des revendications 8 et 9, dans lequel les tailles de particules de la poudre céramique mise en oeuvre à l'étape a) sont distribuées selon une répartition bimodale.

11. Procédé selon l'une quelconque des revendications 8 à 10, dans lequel, on ajoute audit mélange M un agent stabilisant dont la viscosité instantanée, en Pa.s, augmente d'au moins un facteur dix quand une vitesse de cisaillement dudit agent stabilisant diminue de 100 s⁻¹ à 0 s⁻¹.

12. Procédé selon la revendication 11 dans lequel ledit agent stabilisant est choisi dans le groupe formé par le xanthane et le carraghénane ou un mélange de ceux-ci.

13. Procédé selon l'une quelconque des revendications 8 à 12 dans lequel, à l'étape a), on ajoute audit mélange M un agent plastifiant en une quantité en poids comprise entre 0,25 et 1 fois celle dudit agent gélifiant.

14. Utilisation d'une mousse céramique poreuse selon l'une quelconque des revendications 1 à 7 ou d'une mousse céramique poreuse fabriquée selon un procédé conforme à l'une quelconque des revendications 8 à 13 pour l'isolation thermique, notamment dans les fours, pour des supports de catalyse, pour la filtration de liquides ou de gaz chauds, comme diffuseur dans un brûleur à gaz, dans un récepteur volumétrique solaire, ou comme pièce de gazetterie.

## Patentansprüche

1. Poröser gebrannter keramischer Schaum mit einer Gesamtporosität zwischen 50 und 92 % und einer intergranularen Porosität von mindestens 5 %, wobei die intergranulare Porosität durch Poren mit einer Größe von weniger als 10 µm gebildet wird, wobei mehr als 15 % der Zellporen eine Größe von mehr als 300 µm aufweisen, wobei der Schaum umkristallisiertes Siliciumcarbid umfasst.

2. Poröser keramischer Schaum nach Anspruch 1,
umfassend mindestens 95 Masse-% umkristallisiertes Silicumcarbid.

3. Poröser keramischer Schaum nach einem der vorhergehenden Ansprüche,
mit einer intergranularen Porosität von mindestens 8 %.

4. Poröser keramischer Schaum nach Anspruch 1,
mit einer intergranularen Porosität von mindestens 10 %.

5. Poröser keramischer Schaum nach einem der vorhergehenden Ansprüche,
wobei die Größe der intergranularen Poren durchschnittlich 10- bis 100-mal kleiner ist als jene der Zellporen.

6. Poröser keramischer Schaum nach einem der vorhergehenden Ansprüche,
wobei die mittlere Größe der Zellporen zwischen 80 und 120 µm liegt und/oder die mittlere Größe der intergranularen Poren zwischen 1 und 10 µm liegt.

7. Poröser keramischer Schaum nach einem der vorhergehenden Ansprüche,
wobei mindestens 10 % der Zellporen eine Größe von weniger als 10 µm aufweisen, und/oder 20 bis 85 % der Zellporen eine Größe von weniger als 300 µm aufweisen, und/oder 4 bis 40 % der Zellporen eine Größe von mehr als 450 µm aufweisen, wobei die Prozentsätze zahlenmäßige Prozentsätze sind.

8. Verfahren zur Herstellung eines porösen keramischen Schaums nach einem der vorhergehenden Ansprüche, umfassend die folgenden aufeinanderfolgenden Schritte:
a) Herstellung einer Mischung M, die ein keramisches Pulver in Suspension, mindestens ein Geliermittel und mindestens einen Schaumbildner enthält, bei einer höheren Temperatur der Mischung als der Geliertemperatur des Geliermittels,
b) Scheren der Mischung M bei einer höheren Schäumungstemperatur als der Geliertemperatur bis zum Erhalten eines Schaums,
c) Gelierung des Schaums durch Abkühlen der Mischung M auf eine Temperatur unter der Geliertemperatur des Geliermittels,
d) Trocknen des gelierten Schaums, um eine Vorform zu erhalten,
e) Brennen der Vorform, um einen porösen keramischen Schaum zu erhalten,
**dadurch gekennzeichnet, dass** die Mischung M Siliciumcarbid umfasst, und dadurch, dass das Brennen in Schritt e) unter Bedingungen durchgeführt wird, die eine Konsolidierung des Siliciumcarbids durch einen Verdampfungs-Umkristallisations-Mechanismus gestatten.

9. Verfahren nach Anspruch 8,
wobei das in Schritt a) verwendete keramische Pulver mehr als 95 Gew.-% Siliciumcarbid aufweist.

10. Verfahren nach einem der Ansprüche 8 und 9,
wobei die Größen der Teilchen des keramischen Pulvers, das in Schritt a) verwendet wird, gemäß einer bimodalen Verteilung verteilt werden.

11. Verfahren nach einem der Ansprüche 8 bis 10,
wobei der Mischung M ein Stabilisator zugesetzt wird, dessen Instant-Viskosität, in Pa.s, um mindestens einen Faktor von Zehn steigt, wenn eine Schergeschwindigkeit des Stabilisators von 100 s⁻¹ auf 0 s⁻¹ sinkt.

12. Verfahren nach Anspruch 11,
wobei der Stabilisator aus der Gruppe ausgewählt wird, die durch Xanthan und Carrageenan oder eine Mischung von diesen gebildet wird.

13. Verfahren nach einem der Ansprüche 8 bis 12, wobei, in Schritt a), der Mischung M ein Weichmacher in einer Gewichtsmenge zwischen dem 0,25- und 1-Fachen des Geliermittels zugesetzt wird.

14. Verwendung eines porösen keramischen Schaums nach einem der Ansprüche 1 bis 7, oder eines porösen keramischen Schaums, der gemäß einem Verfahren nach einem der Ansprüche 8 bis 13 hergestellt wird, zur thermischen Isolierung, insbesondere in Öfen, für Katalyseträger, zur Filtration von heißen Flüssigkeiten oder Gasen, als Diffusor in einem Gasbrenner, in einem volumetrischen Solarempfänger oder als Brennkapselteil.

## Claims

1. A porous fired ceramic foam having a total porosity in the range 50% to 92% and an intergranular porosity of at least 5%, the intergranular porosity being formed by pores less than 10 µm in size, more than 15% of cellular pores having a diameter of more than 300 µm, the foam comprising recrystallized silicon carbide.

2. A porous ceramic foam according to claim 1, comprising at least 95% by weight of recrystallized silicon carbide.

3. A porous ceramic foam according to anyone of the preceding claims having an intergranular porosity of at least 8%.

4. A porous ceramic foam according to claim 1 having an intergranular porosity of at least 10%.

5. A porous ceramic foam according to anyone of the preceding claims, in which the mean intergranular pore size is 10 to 100 times smaller than that of the cellular pores.

6. A porous ceramic foam according to anyone of the preceding claims, in which the mean cellular pore size is between 80 µm and 120 µm and/or the mean intergranular pore size is between 1 µm and 10 µm.

7. A porous ceramic foam according to anyone of the preceding claims, in which less than 10% of the cellular pores are less than 10 µm in size and/or 20% to 85% of the cellular pores are less than 300 µm in size and/or 4% to 40% of the cellular pores are more than 450 µm in size, the percentages being percentages by number.

8. A method of manufacturing a porous ceramic foam according to anyone of the preceding claims, comprising the following steps in succession:
a) preparing a mixture M containing a ceramic powder in suspension, at least one gelling agent and at least one foaming agent, at a mixing temperature which is higher than the gelling temperature of said gelling agent;
b) shearing said mixture M at a foaming temperature higher than said gelling temperature, to obtain a foam;
c) gelling said foam by cooling said mixture M to a temperature below the gelling temperature of said gelling agent;
d) drying said gelled foam to obtain a preform;
e) firing said preform to obtain a porous ceramic foam;
**characterized in that** the mixture M comprises silicon carbide and **in that** firing step e) is carried out under conditions which allow said silicon carbide to consolidate by an evaporation-recrystallization mechanism.

9. A method according to claim 8, in which the ceramic powder used in step a) has more than 95% by weight, of silicon carbide.

10. A method according to anyone of claims 8 and 9, in which the particle sizes of the ceramic powder employed in step a) are distributed in a bimodal distribution.

11. A method according to anyone of claims 8 to 10, in which a stabilizing agent with an instantaneous viscosity, in Pa.s, that increases by a factor of at least ten when a shear rate of said stabilizing agent is reduced from 100 s⁻¹ to 0 s⁻¹ is added to said mixture M.

12. A method according to claim 11 in which said stabilizing agent is selected from the group formed by xanthan and carrageenan or a mixture thereof.

13. A method according to anyone of claims 8 to 12 in which, in step a), a plasticizing agent is added to said mixture M in a quantity by weight 0.25 to 1 time the quantity, by weight, of said gelling agent.

14. Use of a porous ceramic foam according to anyone of claims 1 to 7 or a porous ceramic foam manufactured according to a process according to anyone of claims 8 to 13 for thermal insulation, in particular in furnaces, for catalyst supports, for filtration of hot gases or liquids, as a diffuser in a gas burner, in a solar volumetric receiver, and a gas furnace furniture.
